# EUROPÄISCHE PATENTSCHRIFT

(11) **EP 3 583 680 B1**
(45) Veröffentlichungstag und Bekanntmachung des Hinweises auf die Patenterteilung: **04.10.2023**
(21) Anmeldenummer: 18705834.2
(22) Anmeldetag: 26.01.2018
(51) Int. Cl.: H02K 19/00, H02K 5/14, H02K 13/00, H02K 23/18

(54) **BÜRSTENMODUL**
BRUSH MODUL
MODULE DE BALAIS

(30) Priorität: 16.02.2017 DE 102017202549
(43) Veröffentlichungstag der Anmeldung: 25.12.2019
(73) Patentinhaber: Schunk Carbon Technology GmbH, 4822 Bad Goisern (AT)
(72) Erfinder: SCHEUCHL, Mario, 4822 Bad Goisern (AT); WEBER, Markus, 4822 Bad Goisern (AT)
(74) Vertreter: advotec.
(86) Internationale Anmeldenummer: PCT/EP2018/051914
(87) Internationale Veröffentlichungsnummer: WO 2018/149615

(56) Entgegenhaltungen:
- EP-A1- 1 551 094
- DE-A1- 10 155 221
- DE-A1-102012 203 098
- US-A1- 2008 061 652

## Beschreibung

Die Erfindung betrifft ein Bürstenmodul für eine rotierende elektrische Maschine sowie eine elektrische Maschine, insbesondere stromerregte Synchronmaschine, wobei das Bürstenmodul zumindest zwei Bürsten zur elektrischen Kontaktierung von Schleifringen der Maschine aufweist, wobei das Bürstenmodul eine Gehäusevorrichtung und Bürstenhalter zur Aufnahme und Halterung der Bürsten aufweist, wobei die Gehäusevorrichtung eine Auffangeinrichtung zur Aufnahme von Bürstenstaub der Bürsten aufweist.

Derartige Bürstenmodule sind hinreichend bekannt und dienen regelmä-βig zur Stromübertragung auf eine drehende Welle einer stromerregten Synchronmaschine. An der Welle sind Schleifringe angeordnet, die mit den Bürsten des Bürstenmoduls kontaktiert sind. Die Bürsten sind in Bürstenhaltern oder sogenannten Bürstenköchern in radialer Richtung relativ zur Welle bewegbar aufgenommen und werden über eine Feder mit einer Federkraft beaufschlagt und so gegen die Schleifringe gedrückt. Da das Bürstenmodul zumindest zwei Bürsten aufweist, können zwei beispielsweise unterschiedlich gepolte Schleifringe mit dem Bürstenmodul kontaktiert werden. Die Bürsten selbst bestehen regelmäßig aus Kohlestoff bzw. Graphit mit gegebenenfalls metallischen Anteilen und sind über eine Litze elektrisch kontaktiert.

Während eines Betriebs der elektrischen Maschine kommt es stets zu einem Abrieb des Materials der Bürsten, so dass die Bürsten kontinuierlich aufgebraucht und in ihrer Länge verkürzt werden. Der Abrieb gelangt in Form von Bürstenstaub bzw. Graphitstaub in eine Umgebung des Bürstenmoduls und lagert sich dort ab.

Nachteilig ist, dass der Bürstenstaub eine leitfähige Staubfläche ausbildet, welche ihrerseits eine sogenannte Kriechstrecke für eine elektrische Ladung ausbildet. So kann eine Kriechstrecke zwischen einem metallischen Bauteil der elektrischen Maschine und einer Bürste bzw. einem Bürstenhalter durch den Bürstenstaub ausgebildet werden (Masseschluss). Weiter kann eine Kriechstrecke zwischen zwei Polen bzw. Bürsten oder Bürstenhaltern ausgebildet werden (Kurzschluss). Bei einem Masseschluss werden Spannungen auf leitende Teile der elektrischen Maschine oder auch eine Umgebung der elektrischen Maschine übertragen und bei einem Kurzschluss jeweils zwischen den elektrischen Polen, was zu einer Funktionsstörung der elektrischen Maschine und/oder einer für einen Antrieb dieser Maschine erforderlichen Leistungselektronik führt. Zwar ist es bekannt bei stromerregten Synchronmaschinen elektrische Energie auch berührungslos, zum Beispiel über induktive Kopplung, auf einen Läufer zu übertragen, diese Systeme sind jedoch aufgrund ihrer technischen Komplexität wesentlich teurer als Bürstenmodule.

Die DE 10 2012 203 098 A1 offenbart ein Bürstenmodul, mit dem Bürsten an einem Ende einer Welle gehaltert und gegenüber einer Umgebung dicht abgeschlossen werden. Bei diesem Bürstenmodul kann eine Kühlung der Bürsten dadurch erfolgen, dass Luft in einem geschlossenen Kreislauf zirkuliert wird, wobei eine sogenannte Filtereinrichtung zum Entfernen von Bürstenstaub aus der Luft vorgesehen ist.

Die EP 1 551 094 A1 betrifft eine rotierende elektrische Maschine für ein Fahrzeug umfassend ein Bürstenmodul, wobei das Bürstenmodul eine Überwachungseinheit aufweist, um eine Abnutzung einer Bürste des Bürstenmoduls zu überwachen.

Die DE 101 55 221 A1 zeigt eine elektrische Maschine, insbesondere einen Drehstromgenerator für Kraftfahrzeuge, welche ebenfalls ein Bürstenmodul aufweist. Ein derartiges Bürstenmodul umfasst eine Gehäusevorrichtung und einen Bürstenhalter zur Aufnahme und Halterung von Bürsten, wobei die Gehäusevorrichtung einen Hohlraum ausbildet, in welchem der Bürstenstaub gesammelt werden kann. Ein Abschnitt der Gehäusevorrichtung ist dabei aus porösem Material ausgebildet, welches luftdurchlässig ist, wodurch eine Überhitzung von Luft in dem Hohlraum vermieden werden kann.

Die US 2008/061652 A1 bezieht sich auf einen Wechselstromgenerator für ein Fahrzeug. An dem Wechselstromgenerator ist ein Bürstenmodul mit zwei Bürsten, über die jeweils Schleifringe kontaktiert werden, angeordnet. Das Bürstenmodul umfasst eine Gehäusevorrichtung zur Halterung der Bürsten sowie eine Auffangeinrichtung zur Aufnahme von Bürstenstaub. Die Bürsten sind relativ zur Welle in einer axialen Richtung an der Welle angeordnet. Die Gehäusevorrichtung ist offenbar so ausgebildet, dass ein Wellenende des Wechselstromgenerators mit den Schleifringen von der Gehäusevorrichtung vollständig abgedeckt ist. Der Bürstenstaub kann in einem Auffangbehälter mit einer taschenförmigen Aufnahme gesammelt werden.

Der vorliegenden Erfindung liegt daher die Aufgabe zugrunde, ein Bürstenmodul bzw. eine elektrische Maschine mit einem Bürstenmodul vorzuschlagen, welches bzw. welche eine Ausbildung von Kriechstrecken vermeidet.

Diese Aufgabe wird durch ein Bürstenmodul mit den Merkmalen des Anspruchs 1 und eine elektrische Maschine mit den Merkmalen des Anspruchs 14 gelöst.

Das erfindungsgemäße Bürstenmodul für eine rotierende elektrische Maschine, insbesondere stromerregte Synchronmaschine, weist zumindest zwei Bürsten zur elektrischen Kontaktierung von Schleifringen der Maschine auf, wobei das Bürstenmodul eine Gehäusevorrichtung und Bürstenhalter zur Aufnahme und Halterung der Bürsten aufweist, wobei die Gehäusevorrichtung eine Auffangeinrichtung zur Aufnahme von Bürstenstaub der Bürsten aufweist, wobei die Auffangeinrichtung Taschen zur Aufnahme von Bürstenstaub aufweist, wobei die Taschen in einer Rotationsrichtung eines Schleifrings, nachfolgend der Bürste angeordnet sind, wobei die Taschen durch in der Rotationsrichtung verlaufende Rippen ausgebildet sind, wobei die Rippen von der Gehäusevorrichtung ausgebildet oder in die Gehäusevorrichtung eingesetzt sind, wobei für jede der Bürsten eine eigene Auffangeinrichtung ausgebildet ist.

Das Bürstenmodul ist insbesondere so ausgebildet, dass nicht bloß die Bürstenhalter an den jeweiligen Schleifringen angeordnet sind, sondern die Gehäusevorrichtung die Bürsten bzw. die Bürstenhalter aufnimmt und haltert. Die zumindest zwei Bürsten werden daher zusammen an der Gehäusevorrichtung gehaltert. Dabei ist vorgesehen, dass die Gehäusevorrichtung eine Auffangeinrichtung für den Bürstenstaub der Bürsten aufweist. Die Auffangeinrichtung ist so ausgebildet, dass der von den Bürsten abgeriebene Bürstenstaub und gegebenenfalls auch Abrieb von den Schleifringen während eines Betriebs der elektrischen Maschine bzw. einer Rotation der Schleifringe in die Auffangeinrichtung gelangt. Der Bürstenstaub wird demnach von der Auffangeinrichtung absorbiert bzw. zumindest zu einem überwiegenden Anteil aufgefangen und kontrolliert gespeichert. Dadurch kann vermieden werden, dass sich größere Mengen Bürstenstaub im Bereich der Bürsten bzw. Bürstenhalter so ablagern, dass eine elektrische Kriechstrecke zwischen den Bürsten bzw. Bürstenhaltern oder anderen elektrisch leitenden Teilen der elektrischen Maschine oder einer Umgebung ausgebildet wird. Insgesamt kann so eine mögliche Fehlfunktion der elektrischen Maschine infolge eines Verschleißes der Bürsten wirkungsvoll verhindert werden.

Erfindungsgemäß weist die Auffangeinrichtung Taschen zur Aufnahme von Bürstenstaub auf, wobei die Taschen in einer Rotationsrichtung eines Schleifrings, nachfolgend der Bürste angeordnet sind. Von den Bürsten abgeriebener Bürstenstaub wird regelmäßig in Rotationsrichtung des Schleifrings gefördert, so dass den Bürsten nachgeordnet Taschen oder taschenartige Ausnehmungen angeordnet sind, in denen sich dieser Bürstenstaub ansammeln kann. Die Taschen können dabei von der Gehäusevorrichtung ausgebildet werden oder auch separat von dieser ausgebildet sein. Dadurch, dass der Bürstenstaub in den Taschen aufgefangen wird, kann er sich kontrolliert in den Taschen anlagern, ohne dass eine Kriechstrecke ausgebildet wird.

Erfindungsgemäß sind die Taschen durch in Rotationsrichtung verlaufende Rippen ausgebildet. Die Rippen können koaxial zu den Schleifringen verlaufen, wobei durch die Rippen eine besonders große Fläche zum Anhaften des Bürstenstaubs zur Verfügung gestellt wird.

Erfindungsgemäß sind die Rippen von der Gehäusevorrichtung ausgebildet oder in die Gehäusevorrichtung eingesetzt.

Erfindungsgemäß ist für jede der Bürsten eine eigene Auffangeinrichtung ausgebildet.

Die Gehäusevorrichtung kann zumindest die Bürsten, vorzugsweise die Bürsten und die Bürstenhalter vollständig umgeben. Wenn die Gehäusevorrichtung so ausgebildet ist, dass die Bürsten bzw. ein Ende der Bürsten, welches mit den Schleifringen kontaktiert ist, von der Gehäusevorrichtung eingehaust ist, kann vermieden werden, dass Bürstenstaub in eine Umgebung der Bürsten, außerhalb der Gehäusevorrichtung, gelangt.

Die Auffangeinrichtung kann dann innerhalb der Gehäusevorrichtung integriert sein. Die Auffangeinrichtung kann prinzipiell auch von der Gehäusevorrichtung getrennt ausgebildet und in diese eingesetzt sein. Alternativ kann die Auffangeinrichtung von der Gehäusevorrichtung ausgebildet werden. Die Gehäusevorrichtung kann auch so ausgebildet sein, dass diese neben den Bürsten auch die Bürstenhalter vollständig umgibt, um einen unerwünschten Austritt von Bürstenstaub zu verhindern. Weiter kann die Gehäusevorrichtung die Bürstenhalter auch nur teilweise umgeben.

Die Gehäusevorrichtung kann so ausgebildet sein, dass sie Schleifringe zumindest abschnittsweise, vorzugsweise vollständig koaxial umgibt. So kann die Gehäusevorrichtung beispielsweise in Gestalt eines Kreisringsegments oder an eine Kreisform der Welle angepasst ausgebildet sein. Die Gehäusevorrichtung kann auch in Art eines vollständigen Kreisrings ausgebildet sein und die Schleifringe in radialer Richtung vollständig umfassen.

So kann die Gehäusevorrichtung gegenüber einer Umgebung staubdicht bzw. überwiegend staubdicht abgedichtet sein. So kann verhindert werden, dass Bürstenstaub aus der Gehäusevorrichtung heraus in eine Umgebung der Schleifringe gelangt und so gegebenenfalls eine Kriechstrecke zu anderen elektrisch leitenden Bauteilen der elektrischen Maschine ausbildet. Eine im Wesentlichen staubdichte Abdichtung gegenüber einer rotierenden Welle kann beispielsweise mittels einer Labyrinthdichtung, einer Dichtlippe, einer Bürstendichtung oder anderen geeigneten Dichtungen ausgebildet werden. Dabei kann vorgesehen sein, dass dennoch ein Austausch von Luft zwischen der Umgebung und einem Inneren der Gehäusevorrichtung, beispielsweise zu Kühlungszwecken, erfolgt.

Weiter kann die Auffangeinrichtung ein Bürstenstaub absorbierendes Material aufweisen. Diese Material kann ein poröses oder auch ein luftdurchlässiges Material sein, wie beispielsweise ein textiles Material, insbesondere ein Vlies. Ein Vlies kann eine große Menge an Bürstenstaub aufnehmen bzw. absorbieren, derart, dass sich der Bürstenstaub auch nicht mehr von dem Vlies ohne Weiteres ablösen kann. So kann sichergestellt werden, dass Bürstenstaub von der Auffangeinrichtung, beispielsweise infolge von Schwingungen, nicht wieder abgegeben werden kann. Das absorbierende Material kann beispielsweise im oder an Taschen der Auffangeinrichtung oder auch an einer Wandung der Gehäusevorrichtung angeordnet sein. Weiter kann vorgesehen sein, das absorbierende Material zu Reinigungszwecken austauschbar anzuordnen.

Die Gehäusevorrichtung kann aus zwei kreisringförmigen Gehäusehälften ausgebildet sein. Die kreisringsförmigen Gehäusehälften können beispielsweise zusammensteckbar oder auch gegeneinander in radialer Richtung verdrehbar ausgebildet sein. Wenn die Gehäusehälften identisch ausgebildet sind, sind sie besonders kostengünstig herstellbar. Optional ist es auch möglich die Gehäusevorrichtung aus zumindest zwei kreissegmentförmigen Gehäusehälften auszubilden, wobei dann eine Teilungsebene der Gehäusehälften in axialer Richtung verläuft. Hinsichtlich der Anordnung der Bürsten kann jede der Gehäusehälften zumindest eine Bürste aufnehmen.

Die Gehäusevorrichtung kann die Bürstenhalter und/oder die Auffangvorrichtungen ausbilden. Wenn die Gehäusevorrichtung durch ein Spritzgussverfahren, beispielsweise aus Kunststoff, hergestellt wird, ist das Bürstenmodul dann besonders kostengünstig herstellbar. Ein Köcher des Bürstenhalters kann dann einfach als eine Ausnehmung in der Gehäusevorrichtung ausgebildet sein, wobei die Auffangvorrichtung als eine einfache Tasche innerhalb der Gehäusevorrichtung ausgebildet sein kann.

Die Bürstenhalter können in axialer Richtung, relativ bezogen auf die Schleifringe, voneinander beabstandet sein, dies ist insbesondere dann möglich, wenn zumindest zwei Schleifringe mit zumindest jeweils einer Bürste kontaktiert werden sollen.

Weiter können zumindest zwei Bürsten zur elektrischen Kontaktierung eines Schleifrings vorgesehen sein, wobei die jeweiligen Bürstenhalter in radialer Richtung, relativ bezogen auf den Schleifring, voneinander beabstandet sein können. Beispielsweise können die zwei Bürstenhalter dann achsensymmetrisch zu den Schleifringen, einander gegenüberliegend, angeordnet sein. Eine Ausbildung einer möglichen Kriechstrecke zwischen den Bürsten bzw. Bürstenhaltern ist dann erheblich erschwert. Die Bürstenhalter können in einem maximalen Relativabstand an der Gehäusevorrichtung angeordnet sein. So können die Bürstenhalter in axialer als auch in radialer Richtung so weit als möglich voneinander beabstandet durch die Ausbildung der Gehäusevorrichtung angeordnet sein.

Ein alternatives Bürstenmodul für eine rotierende elektrische Maschine, insbesondere stromerregte Synchronmaschine, kann zumindest zwei Bürsten zur elektrischen Kontaktierung von Schleifringen der Maschine aufweisen, wobei das Bürstenmodul eine Gehäusevorrichtung und Bürstenhalter zur Aufnahme und Halterung der Bürsten aufweisen kann, wobei die Gehäusevorrichtung derart ausgebildet sein kann, dass die Bürstenhalter voneinander beabstandet sind, wobei die Gehäusevorrichtung an einem Schleifringen zugewandten Gehäuseabschnitt der Gehäusevorrichtung zumindest abschnittsweise einen Luftspalt zwischen den Bürstenhaltern ausbilden kann, wobei die Gehäusevorrichtung einen einzelnen Gehäusekörper aufweisen und die Bürstenhalter ausbilden kann, wobei der Luftspalt in dem Gehäusekörper und eine Breite des Luftspaltes in Abhängigkeit einer vorausgesetzten Betriebsspannung an den Bürsten ausgebildet sein können.

Demnach sind die Bürstenhalter in einer gemeinsamen Gehäusevorrichtung aufgenommen bzw. werden von dieser ausgebildet, wobei die Gehäusevorrichtung so beschaffen ist, dass ein Abstand zwischen den Bürstenhaltern ausgebildet wird. Da sich insbesondere an den Schleifringen zugewandten Gehäuseabschnitt der Gehäusevorrichtung Bürstenstaub der Bürsten ablagern kann, ist vorgesehen, dass die Gehäusevorrichtung einen Luftspalt zwischen den Bürstenhaltern an diesem Gehäuseabschnitt ausbildet. Selbst wenn es dann zu einer Ablagerung von Bürstenstaub an dem Schleifringen zugewandten Gehäuseabschnitt der Gehäusevorrichtung kommen sollte, muss diese Ablagerung von Bürstenstaub so groß sein, dass dieser Luftspalt überbrückt wird, damit eine Kriechstrecke zwischen den Bürsten bzw. Polen ausgebildet wird. Der Luftspalt ist jedoch so bemessen, dass er kaum mit Bürstenstaub ausfüllbar bzw. überbrückbar ist. So kann mit einer einfachen Ausgestaltung der Gehäusevorrichtung die Bildung einer Kriechstrecke durch Bürstenstaub verhindert werden.

Die Gehäusevorrichtung kann einen einzelnen Gehäusekörper aufweisen und gleichzeitig die Bürstenhalter ausbilden. Der Luftspalt in dem Gehäusekörper kann auch so ausgebildet sein, dass eine Breite des Luftspaltes in Abhängigkeit einer vorausgesetzten Betriebsspannung an den Bürsten ausgebildet ist. Unter der vorausgesetzten Betriebsspannung wird eine für einen Regelbetrieb vorgesehene, maximale Betriebsspannung an den Bürsten verstanden. Die Breite bzw. eine Mindestbreite kann dann leicht auf Basis einer angenommenen Durchschlagsfestigkeit von 1 kV/mm für Luft nach der Norm IEC 60243 errechnet werden.

Der Luftspalt kann in dem Gehäusekörper ausgebildet sein und ≥5 mm lang sein. Bei einem Luftspalt dieser Länge kann eine Überbrückung bzw. Ausbildung einer Kriechstrecke mittels Bürstenstaub nahezu ausgeschlossen werden. Eine Länge des Luftspalts kann mehrere Zentimeter betragen.

Besonders vorteilhaft ist es, wenn der Bürstenhalter oder die Bürste eine Meldeeinrichtung zur Verschleißerkennung aufweist. Die Meldeeinrichtung kann durch einen Schalter bzw. einen Kontakt am Bürstenhalter, der eine Länge einer Bürste detektieren kann, oder einen Kontakt innerhalb der Bürsten, der bei einem bestimmten Verschleißgrad ausgelöst wird, ausgebildet sein.

Die erfindungsgemäße elektrische Maschine, insbesondere stromerregte Synchronmaschine, weist ein erfindungsgemäßes Bürstenmodul auf. Weitere vorteilhafte Ausführungsformen der elektrischen Maschine ergeben sich aus den auf die Vorrichtungsansprüche rückbezogenen Unteransprüchen.

Nachfolgend werden bevorzugte Ausführungsformen der Erfindung unter Bezugnahme auf die beigefügten Zeichnungen näher erläutert.

Es zeigen:
- **Fig. 1**: eine Querschnittansicht einer ersten Ausführungsform eines Bürstenmoduls;
- **Fig. 2**: eine perspektivische Teilansicht einer zweiten Ausführungsform eines Bürstenmoduls;
- **Fig. 3**: eine Querschnittansicht des Bürstenmoduls aus **Fig. 1****;**
- **Fig. 4**: eine Längsschnittansicht einer dritten Ausführungsform eines Bürstenmoduls;
- **Fig. 5**: eine Seitenansicht einer vierten Ausführungsform eines Bürstenmoduls.

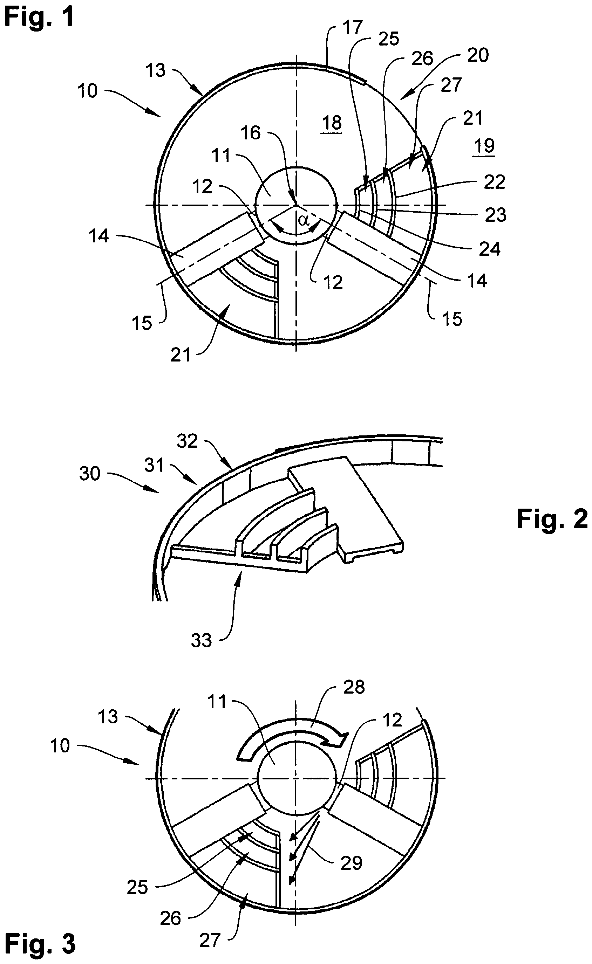

Die **Fig. 1** zeigt eine schematische Schnittansicht eines Bürstenmoduls 10 an einem Schleifring 11 einer stromerregten Synchronmaschine. Das Bürstenmodul 10 weist zwei Bürsten 12 zur elektrischen Kontaktierung des Schleifrings 11 sowie eine Gehäusevorrichtung 13 mit Bürstenhalter 14 auf. Die Bürsten 12 sind in den Bürstenhaltern 14 in Richtung einer Längsachse 15 der Bürstenhalter 14 beweglich gelagert und werden mittels einer hier nicht gezeigten Feder, beispielsweise einer Schraubenfeder, einer Blattfeder oder einer Rollbandfeder gegen den Schleifring 11 gedrückt. Die Bürstenhalter 14 sind um einen Winkel α relativ zueinander versetzt zu einer Achse 16 des Schleifrings 11 angeordnet. Die Gehäusevorrichtung 13 ist kreisringsförmig ausgebildet und weist eine äußere Gehäusewandung 17 auf, die einen Innenraum 18 ausbildet, der gegenüber einer Umgebung 19 im Wesentlichen staubdicht abgedichtet ist. In der Gehäusewandung 17 ist eine Öffnung 20 zur Durchführung hier nicht dargestellter elektrischer Leitungen mit einem Dichtelement, welches die Öffnung 20 abdichtet, ausgebildet. Innerhalb der Gehäusevorrichtung 13 sind Auffangeinrichtungen 21 zur Aufnahme von Bürstenstaub der Bürsten 12 ausgebildet. Die Auffangeinrichtungen sind aus Rippen 22, 23, 24 ausgebildet, die Taschen 25, 26 bzw. 27 ausbilden. Die Rippen 22 bis 24 verlaufen im Wesentlichen in einer hier mit einem Pfeil 28 gekennzeichneten Rotationsrichtung des Schleifrings 11. Bürstenstaub wird dann, wie aus **Fig. 3** ersichtlich ist, in Richtung von Pfeilen 29 von den Bürsten 12 bei einer Rotation des Schleifrings 11 weggefördert und gelangt in die Taschen 25, 26 und 27.

Wie aus **Fig. 2** ersichtlich ist, kann ein Bürstenmodul 30 auch eine hier nicht vollständig dargestellte Gehäusevorrichtung 31 aufweisen, welche aus zwei Gehäusehälften 32 ausgebildet ist. Die Gehäusehälfte 32 bildet hier eine Auffangeinrichtung 33 aus.

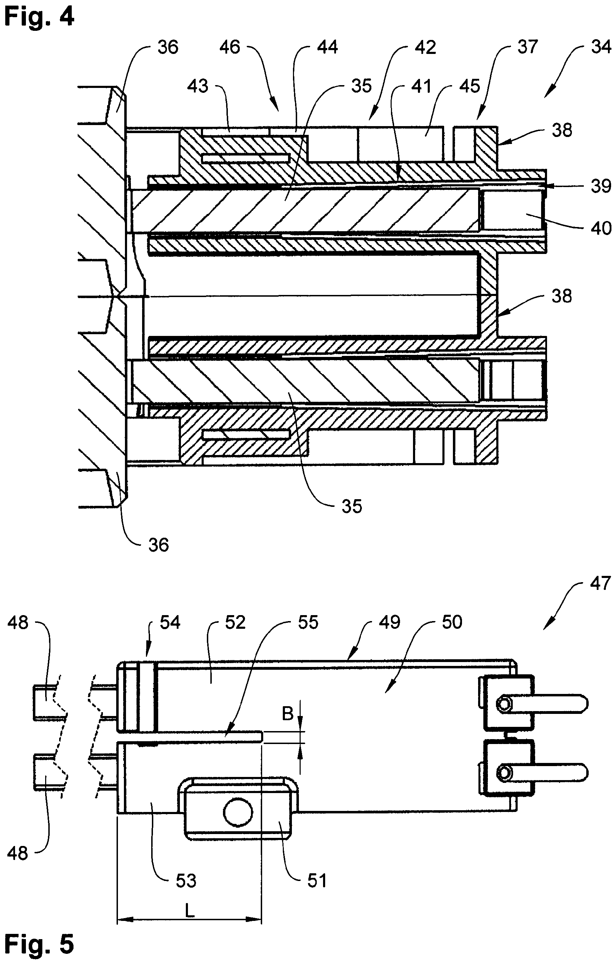

Die **Fig. 4** zeigt ein Bürstenmodul 34 mit Bürsten 35 an Schleifringen 36. Das Bürstenmodul 34 weist eine Gehäusevorrichtung 37, die zumindest zwei Gehäusehälften 38 umfasst, auf. Innerhalb jeder Gehäusehälfte 38 ist ein Köcher 39 ausgebildet, der zusammen mit einer Rollbandfeder 40 einen Bürstenhalter 41 ausbildet. Benachbart dem Bürstenhalter 41 ist an einer Seitenfläche 42 der Gehäusehälfte 38 eine Anzahl Rippen 43, 44 und 45 ausgebildet, die hier nicht näher ersichtliche Taschen einer Auffangeinrichtung 46 für Bürstenstaub ausbilden. Eine abschließende Abdeckung der Auffangeinrichtung 46 ist hier nicht dargestellt.

Die **Fig. 5** zeigt ein Bürstenmodul 47 mit zwei Bürsten 48 und einer Gehäusevorrichtung 49, die einen Gehäusekörper 50 ausbildet. Der Gehäusekörper 50 ist an einer Befestigungslasche 51 an einer hier nicht näher dargestellten stromerregten Synchronmaschine gehaltert. Auch bildet der Gehäusekörper 50 zwei Bürstenhalter 52 und 53 aus. In einem einem Schleifring zugewandten Gehäuseabschnitt 54 der Gehäusevorrichtung 49 bzw. des Gehäusekörpers 50 ist ein Luftspalt 55 zwischen den Bürstenhaltern 52 und 53 ausgebildet. Eventuell im Bereich der Bürsten 48 sich ablagernder Bürstenstaub kann eine Breite (B) des Luftspalts 55 nicht überbrücken bzw. eine Länge (L) des Luftspalts 55 nicht ausfüllen, so dass durch den Luftspalt 55 ein eventueller Kurschluss einfach verhindert werden kann.

## Patentansprüche

1. Bürstenmodul (10, 30, 34) für eine rotierende elektrische Maschine, insbesondere stromerregte Synchronmaschine, wobei das Bürstenmodul (10, 30, 34) zumindest zwei Bürsten (12, 35) zur elektrischen Kontaktierung von Schleifringen (11, 36) der elektrischen Maschine aufweist, wobei das Bürstenmodul (10, 30, 34) eine Gehäusevorrichtung (13, 31, 37) und Bürstenhalter (14, 41) zur Aufnahme und Halterung der Bürsten (12, 35) aufweist, wobei die Gehäusevorrichtung (13, 31, 37) eine Auffangeinrichtung (21, 33, 46) zur Aufnahme von Bürstenstaub der Bürsten (12, 35) aufweist,
**dadurch gekennzeichnet,**
**dass** die Auffangeinrichtung (21, 33, 46) Taschen (25, 26, 27) zur Aufnahme von Bürstenstaub aufweist, wobei die Taschen (25, 26, 27) in einer Rotationsrichtung (28) eines Schleifrings (11, 36), nachfolgend der Bürste (12, 35) angeordnet sind, wobei die Taschen (25, 26, 27) durch in der Rotationsrichtung (28) verlaufende Rippen (22, 23, 24, 43, 44, 45) ausgebildet sind, wobei die Rippen (22, 23, 24, 43, 44, 45) von der Gehäusevorrichtung (13, 31, 37) ausgebildet oder in die Gehäusevorrichtung (13, 31, 37) eingesetzt sind, wobei für jede der Bürsten (12, 35) eine eigene Auffangeinrichtung (21, 33, 46) ausgebildet ist.

2. Bürstenmodul (10, 30, 34) nach Anspruch 1,
**dadurch gekennzeichnet,**
**dass** die Gehäusevorrichtung (13, 31, 37) zumindest die Bürsten (12, 35), vorzugsweise die Bürsten (12, 35) und die Bürstenhalter (14, 41) vollständig umgibt.

3. Bürstenmodul (10, 30, 34) nach Anspruch 1 oder 2,
**dadurch gekennzeichnet,**
**dass** die Gehäusevorrichtung (13, 31, 37) so ausgebildet ist, dass sie Schleifringe (11, 36) zumindest abschnittsweise, vorzugsweise vollständig koaxial umgibt.

4. Bürstenmodul (10, 30, 34) nach einem der vorangehenden Ansprüche,
**dadurch gekennzeichnet,**
**dass** die Gehäusevorrichtung (13, 31, 37) gegenüber einer Umgebung (19) staubdicht abgedichtet ist.

5. Bürstenmodul (10, 30, 34) nach einem der vorangehenden Ansprüche,
**dadurch gekennzeichnet,**
**dass** die Auffangeinrichtung (21, 33, 46) ein Bürstenstaub absorbierendes Material aufweist.

6. Bürstenmodul (10, 30, 34) nach einem der vorangehenden Ansprüche,
**dadurch gekennzeichnet,**
**dass** die Gehäusevorrichtung (13, 31, 37) aus zwei kreisringförmigen Gehäusehälften (32, 38) ausgebildet ist.

7. Bürstenmodul (10, 30, 34) nach einem der vorangehenden Ansprüche,
**dadurch gekennzeichnet,**
**dass** die Gehäusevorrichtung (13, 31, 37) die Bürstenhalter (14, 41) und/oder die Auffangvorrichtungen (21, 33, 46) ausbildet.

8. Bürstenmodul (10, 30, 34) nach einem der vorangehenden Ansprüche,
**dadurch gekennzeichnet,**
**dass** die Bürstenhalter (14, 41) in axialer Richtung, relativ bezogen auf die Schleifringe (11, 36), voneinander beabstandet sind.

9. Bürstenmodul (10, 30, 34) nach einem der vorangehenden Ansprüche,
**dadurch gekennzeichnet,**
**dass** zumindest zwei Bürsten (12, 35) zur elektrischen Kontaktierung eines Schleifrings (11, 36) vorgesehen sind, wobei die jeweiligen Bürstenhalter (14, 41) in radialer Richtung, relativ bezogen auf den Schleifring (11, 36), voneinander beabstandet sind.

10. Bürstenmodul (10, 30, 34) nach einem der vorangehenden Ansprüche,
**dadurch gekennzeichnet,**
**dass** die Bürstenhalter (14, 41) in einem maximalen Relativabstand angeordnet sind.

11. Bürstenmodul (47) nach einem der vorangehenden Ansprüche, **dadurch gekennzeichnet,**
**dass** die Gehäusevorrichtung (49) derart ausgebildet ist, dass die Bürstenhalter (52, 53) voneinander beabstandet sind, wobei die Gehäusevorrichtung (49) an einem Schleifringen zugewandten Gehäuseabschnitt (54) der Gehäusevorrichtung (49) zumindest abschnittsweise einen Luftspalt (55) zwischen den Bürstenhaltern (52, 53) ausbildet, wobei die Gehäusevorrichtung (49) einen einzelnen Gehäusekörper (50) aufweist und die Bürstenhalter (52, 53) ausbildet, wobei der Luftspalt (55) in dem Gehäusekörper (50) ausgebildet und eine Breite des Luftspaltes (55) in Abhängigkeit einer vorausgesetzten Betriebsspannung an den Bürsten (48) ausgebildet ist.

12. Bürstenmodul (47) nach Anspruch 11,
**dadurch gekennzeichnet,**
**dass** der Luftspalt (55) in dem Gehäusekörper (50) ausgebildet und ≥ 5 mm lang ist.

13. Bürstenmodul (47) nach einem der vorangehenden Ansprüche,
**dadurch gekennzeichnet,**
**dass** der Bürstenhalter (14, 41, 52, 53) oder die Bürste (12, 35, 48) eine Meldeeinrichtung zur Verschleißerkennung aufweist.

14. Elektrische Maschine, insbesondere stromerregte Synchronmaschine, **dadurch gekennzeichnet,**
**dass** die elektrische Maschine ein Bürstenmodul (10, 30, 34, 47) nach einem der vorangehenden Ansprüche aufweist.

## Claims

1. A brush module (10, 30, 34) for a rotating electric machine, in particular for a current-excited synchronous machine, the brush module (10, 30, 34) having at least two brushes (12, 35) for establishing electrical contact with slip rings (11, 36) of the electric machine, the brush module (10, 30, 34) having a housing device (13, 31, 37) and brush holders (14, 41) for accommodating and supporting the brushes (12, 35), the housing device (13, 31, 37) having a collecting device (21, 33, 46) for collecting brush dust of the brushes (12, 35),
**characterized in that**
the collecting device (21, 33, 46) has pockets (25, 26, 27) for collecting brush dust, the pockets (25, 26, 27) being disposed downstream of the brush (12, 35) in a direction of rotation (28) of a slip ring (11, 36), the pockets (25, 26, 27) being formed by ribs (22, 23, 24, 43, 44, 45) extending in the direction of rotation (28), the ribs (22, 23, 24, 43, 44, 45) being formed by the housing device (13, 31, 37) or being inserted in the housing device (13, 31, 37), each brush (12, 35) being provided with its own collecting device (21, 33, 46).

2. The brush module (10, 30, 34) according to claim 1,
**characterized in that**
the housing device (13, 31, 37) fully surrounds at least the brushes (12, 35), preferably the brushes and the brush holders (14, 41).

3. The brush module (10, 30, 34) according to claim 1 or 2,
**characterized in that**
the housing device (13, 31, 37) is configured to coaxially surround slip rings (11, 36) at least partially, preferably fully.

4. The brush module (10, 30, 34) according to any one of the preceding claims,
**characterized in that**
the housing device (13, 31, 37) is sealed in a dustproof manner against an environment (19).

5. The brush module (10, 30, 34) according to any one of the preceding claims,
**characterized in that**
the collecting device (21, 33, 46) has a material that absorbs brush dust.

6. The brush module (10, 30, 34) according to any one of the preceding claims,
**characterized in that**
the housing device (13, 31, 37) is composed of two circular ringshaped housing halves (32, 38).

7. The brush module (10, 30, 34) according to any one of the preceding claims,
**characterized in that**
the housing device (13, 31, 37) forms the brush holders (14, 41) and/or the collecting devices (21, 33, 46).

8. The brush module (10, 30, 34) according to any one of the preceding claims,
**characterized in that**
the brush holders (14, 41) are spaced apart in the axial direction with respect to the slip rings (11, 36).

9. The brush module (10, 30, 34) according to any one of the preceding claims,
**characterized in that**
at least two brushes (12, 35) for establishing electrical contact with a slip ring (11, 36) are provided, the respective brush holders (14, 41) being spaced apart in the radial direction with respect to the slip ring (11, 36).

10. The brush module (10, 30, 34) according to any one of the preceding claims,
**characterized in that**
the brush holders (14, 41) are disposed at maximum relative distance.

11. The brush module (47) according to any one of the preceding claims,
**characterized in that**
the housing device (49) is configured in such a manner that the brush holders (52, 53) are spaced apart from each other, the housing device (49) at least partially forming an air gap (55) between the brush holders (52, 53) on a housing portion (54) of the housing device (49) that faces toward slip rings, the housing device (49) having a single housing body (50) and forming the brush holders (52, 53), the air gap (55) being formed in the housing body (50), and a width of the air gap (55) being formed as a function of a presumed operating voltage at the brushes (48).

12. The brush module (47) according to claim 11,
**characterized in that**
the air gap (55) is formed in the housing body (50) and is ≥ 5 mm in length.

13. The brush module (47) according to any one of the preceding claims,
**characterized in that**
the brush holder (14, 41, 52, 53) or the brush (12, 35, 48) has a reporting device for wear detection.

14. An electric machine, in particular a current-excited synchronous machine,
**characterized in that**
the electric machine has a brush module (10, 30, 34, 47) according to any one of the preceding claims.

## Revendications

1. Module de balais (10, 30, 34) pour une machine électrique tournante, notamment pour une machine synchrone excitée par courant, le module de balais (10, 30, 34) ayant au moins deux balais (12, 35) pour établir un contact électrique avec des bagues collectrices (11, 36) de la machine électrique, le module de balais (10, 30, 34) ayant un dispositif de boîtier (13, 31, 37) et des porte-balais (14, 41) pour loger et supporter les balais (12, 35), le dispositif de boîtier (13, 31, 37) ayant un dispositif collecteur (21, 33, 46) pour collecter la poussière des balais (12, 35),
**caractérisé en ce que**
le dispositif collecteur (21, 33, 46) a des poches (25, 26, 27) pour collecter la poussière de balai, les poches (25, 26, 27) étant disposées en aval du balai (12, 35) dans une direction de rotation (28) d'une bague collectrice (11, 36), les poches (25, 26, 27) étant formées par des nervures (22, 23, 24, 43, 44, 45) s'étendant dans la direction de rotation (28), les nervures (22, 23, 24, 43, 44, 45) étant formées par le dispositif de boîtier (13, 31, 37) ou étant insérées dans le dispositif de boîtier (13, 31, 37), un propre dispositif collecteur (21, 33, 46) étant formé pour chaque balai (12, 35).

2. Module de balais (10, 30, 34) selon la revendication 1,
**caractérisé en ce que**
le dispositif de boîtier (13, 31, 37) entoure entièrement au moins les balais (12, 35), de préférence les balais et les porte-balais (14, 41).

3. Module de balais (10, 30, 34) selon la revendication 1 ou 2,
**caractérisé en ce que**
le dispositif de boîtier (13, 31, 37) est configuré de telle manière qu'il entoure coaxialement des bagues collectrices (11, 36) au moins en partie, de préférence entièrement.

4. Module de balais (10, 30, 34) selon l'une quelconque des revendications précédentes,
**caractérisé en ce que**
le dispositif de boîtier (13, 31, 37) est scellé de manière étanche à la poussière par rapport à un environnement (19).

5. Module de balais (10, 30, 34) selon l'une quelconque des revendications précédentes,
**caractérisé en ce que**
le dispositif collecteur (21, 33, 46) a un matériau qui absorbe la poussière de balai.

6. Module de balais (10, 30, 34) selon l'une quelconque des revendications précédentes,
**caractérisé en ce que**
le dispositif de boîtier (13, 31, 37) se compose de deux moitiés de boîtier (32, 38) en forme d'anneau circulaire.

7. Module de balais (10, 30, 34) selon l'une quelconque des revendications précédentes,
**caractérisé en ce que**
le dispositif de boîtier (13, 31, 37) forme les porte-balais (14, 41) et/ou les dispositifs collecteurs (21, 33, 46).

8. Module de balais (10, 30, 34) selon l'une quelconque des revendications précédentes,
**caractérisé en ce que**
les porte-balais (14, 41) sont espacés l'un de l'autre dans la direction axiale par rapport aux bagues collectrices (11, 36).

9. Module de balais (10, 30, 34) selon l'une quelconque des revendications précédentes,
**caractérisé en ce**
**qu'**au moins deux balais (12, 35) pour établir un contact électrique avec une bague collectrice (11, 36) sont prévus, les porte-balais (14, 41) respectifs étant espacés l'un de l'autre dans la direction radiale par rapport à la bague collectrice (11, 36).

10. Module de balais (10, 30, 34) selon l'une quelconque des revendications précédentes,
**caractérisé en ce que**
les porte-balais (14, 41) sont disposés à une distance relative maximale.

11. Module de balais (47) selon l'une quelconque des revendications précédentes,
**caractérisé en ce que**
le dispositif de boîtier (49) est configuré de telle manière que les porte-balais (52, 53) sont espacés l'un de l'autre, le dispositif de boîtier (49) formant, au moins par sections, un entrefer (55) entre les porte-balais (52, 53) sur une partie de boîtier (54) du dispositif de boîtier (49) qui est tournée vers des bagues collectrices, le dispositif de boîtier (49) ayant un seul corps de boîtier (50) et formant les porte-balais (52, 53), l'entrefer (55) étant formé dans le corps de boîtier (50) et une largeur de l'entrefer (55) étant formée en fonction d'une tension de service présumée au niveau des balais (48).

12. Module de balais (47) selon la revendication 11,
**caractérisé en ce que**
l'entrefer (55) est formé dans le corps de boîtier (50) et a une longueur de ≥ 5 mm.

13. Module de balais (47) selon l'une quelconque des revendications précédentes,
**caractérisé en ce que**
le porte-balai (14, 41, 52, 53) ou le balai (12, 35, 48) a un dispositif de signalisation pour la détection d'usure.

14. Machine électrique, notamment machine synchrone excitée par courant,
**caractérisée en ce que**
la machine électrique a un module de balais (10, 30, 34, 47) selon l'une quelconque des revendications précédentes.
